# EUROPÄISCHE PATENTANMELDUNG

(11) **EP 0 939 570 A2**
(43) Veröffentlichungstag der Anmeldung: **01.09.1999**
(21) Anmeldenummer: 99101659.3
(22) Anmeldetag: 05.02.1999
(51) Int. Cl.: H04Q 7/38, H04M 15/00

(54) **Verfahren zur lokationsabhängigen Vergebührung von Verbindungen zwischen mobilen Teilnehmern oder zwischen mobilen Teilnehmern und Festnetzteilnehmern in einem Telekommunikationsnetz**

(30) Priorität: 27.02.1998 DE 19808499
(71) Anmelder: SIEMENS AKTIENGESELLSCHAFT, 80333 München (DE)
(72) Erfinder: Wimmreuter, Wilhelm, 81543 München (DE)

(57) **Zusammenfassung**

Um während einer Verbindung zwischen einem mobilen Teilnehmer und einem weiteren Teilnehmer eines Telekommunikationsnetzes den Aufenthalt des mobilen Teilnehmers innerhalb eines ihm zugeteilten Heimatbereichs feststellen zu können, wird eine Lokationsinformation über die mit dem mobilen Endgerät (MS) des mobilen Teilnehmers in Verbindung stehende funktechnische Einrichtung (BS) an eine für den anrufenden Teilnehmer zuständige vergebührende Vermittlungsstelle (MSC, VST) zum Zwecke einer lokationsabhängigen Vergebührung übertragen.

## Beschreibung

Die Erfindung betrifft ein Verfahren zur lokationsabhängigen Vergebührung von Verbindungen zwischen mobilen Teilnehmern oder zwischen mobilen Teilnehmern und Festnetzteilnehmern in einem Telekommunikationsnetz gemäß dem Oberbegriff des Patentanspruchs 1.

Bekanntlich setzt sich ein Telekommunikationsnetz mindestens aus einem Festnetz und/oder einem beispielsweise nach dem GSM-Standard (Global System for Mobil Communication) definierten, zellular strukturierten Mobilfunknetz, bestehend aus einer Mehrzahl von Funkzellen als kleinste Funkversorgungsbereiche, zusammen. Die Struktur, Anzahl und Anordnung der Funkzellen werden durch die geographischen Orte von funktechnischen Einrichtungen und deren Anzahl bestimmt. Eine funktechnischen Einrichtung, die gemäß einer üblicherweise vom Mobilfunknetzbetreiber vorgegebenen Funknetzplanung an einem bestimmten geographischen Ort aufgestellt ist, sendet und empfängt Signalisierungsnachrichten und/oder Nutzinformationen von bzw. zu einem mobilen Endgerät eines mobilen Teilnehmers, der sich in einer zur funktechnischen Einrichtung gehörenden Funkzelle aufhält. Ferner ist die funktechnische Einrichtung normalerweise über PCM-Strecken mit einer Mobilvermittlungsstelle verbunden. Bei einer Verbindung zwischen mobilen Teilnehmern oder zwischen einem mobilen Teilnehmer und einem Festnetzteilnehmer wird der anrufende Teilnehmer in der Regel zeit-, Netz- bzw. Länder-abhängig vergebührt.

Mit zunehmender Deregulierung von Telekommunikationsnetzen wünschen vor allem Mobilfunknetzbetreiber, den anrufenden mobilen Teilnehmer oder den anrufenden Festnetzteilnehmer bei Aufenthalt des mobilen Teilnehmers innerhalb einer zu einem definierten Heimatbereich gehörenden Funkzelle eine auch lokationsabhängige Tarifstruktur ähnlich wie im Festnetz anzubieten. Mit einer solchen Tarifstruktur können Mobilfunkbetreiber als Konkurrenten zu Festnetzbetreibern auf dem Telekommunikationsmarkt auftreten.

Die Aufgabe der Erfindung besteht daher darin, ein Verfahren zu einer möglichst flexiblen lokationsabhängigen Vergebührung von Verbindungen zwischen einem mobilen und weiteren Teilnehmer des Telekommunikationsnetzes zu entwickeln.

Diese Aufgabe wird durch die im Kennzeichen des Anspruchs 1 angegebenen Merkmale gelöst.

Gemäß dem Gegenstand der Erfindung wird bei einer Verbindung zwischen einem mobilen Teilnehmer und einem weiteren Teilnehmer des Telekommunikationsnetzes eine Lokationsinformation über die funktechnische Einrichtung, in deren Funkzelle sich der mobile Teilnehmer während der Verbindung befindet, an eine für den anrufenden Teilnehmer zuständige vergebührende Vermittlungsstelle übertragen. Dadurch kann vermittlungsseitig überprüft werden, ob sich der mobile Teilnehmer innerhalb eines ihm zugeordneten Heimatbereichs aufhält. Ein solcher Heimatbereich wird durch eine Funkzelle oder durch Zusammenfassung von Funkzellen und/oder durch einen mindenstens von einer Funkzelle überdeckten geographischen Bereich definiert. Entsprechend dem Aufenthaltsort des mobilen Teilnehmers wird bei der Vergebührung ein dem Heimatbereich zugeordneter Heimattarif oder ein außerhalb des Heimatbereichs geltender Mobilfunktarif berechnet. Die Vereinbarung eines zu einem Heimattarif vergebührten Heimatbereiches mit einem mobilen Teilnehmer und die vermittlungsseitige Überprüfung des Aufenthaltsortes des angerufenen oder gerufenen mobilen Teilnehmers mittels der Lokationsinformation ermöglichen eine flexible und lokationsabhängige Tarifstruktur ähnlich der Tarifstruktur im Festnetz.

Weitere Ausgestaltungen der Erfindung sind in Unteransprüchen gekennzeichnet.

Gemäß einer vorteilhaften Weiterbildung der Erfindung wird die Lokationsinformation in Form von Signalisierungsnachrichten beispielsweise eines Mehrfrequenzkode (MFC) oder eines ISUP-Protokolls (ISDN User Part) an die vergebührende Vermittlungsstelle übertragen. Der Vorteil besteht darin, daß für die Übertragung der Lokationsinformation existierende Signalisierungsverfahren bzw. -protokolle benutzt werden können, wodurch eine Realisierung des erfindungsgemäßen Verfahrens zur lokationsabhängigen Vergebührung erheblich erleichtert wird.

In einer Ergänzung zur Erfindung werden vorzugsweise zumindest eine Zellkennung zur Identifikation der Funkzellen und/oder zumindest die Kennung eines geographischen Ortes einer funktechnischen Einrichtung als Lokationsinformation übertragen.

Eine weitere Ausgestaltung der Erfindung sieht vor, daß die Lokationsinformation bei einem Verbindungsaufbau und/oder Verbindungsabbau an die vergebührende Vermittlungsstelle übertragen wird. Dadurch wird die Verkehrsbelastung im Telekommunikationsnetz verringert.

Weiterhin ist es von Vorteil, wenn die Lokationsinformation nicht nur bei einem Verbindungsaufbau und/oder Verbindungsabbau, sondern auch bei einem Wechsel des mobilen Teilnehmers in eine Funkzelle einer anderen funktechnischen Einrichtung, an die vergebührende Vermittlungsstelle übertragen wird. Die während einer Verbindung neu übertragene Lokationsinformation wird mit der aktuellen Lokationsinformation verglichen. Wenn beide Lokationsinformationen nicht übereinstimmen, dann wird festgestellt, ob der mobile Teilnehmer sich weiterhin innerhalb bzw. außerhalb seines Heimatbereichs befindet oder ob er ihn gerade betreten bzw. verlassen hat. Dementsprechend wird ein Zeitpunkt für einen Tarifwechsel in der Vergebührung erfaßt.

Nachstehend wird ein Ausführungsbeispiel der Erfindung unter Bezugnahme auf eine Zeichnung näher beschrieben.

In der Zeichnung zeigen:
Figur 1 einzelne Netzelemente eines Telekommunikationsnetzes
Figur 2 eine mögliche Ausgestaltung eines Heimatbereichs
Figur 3 ein Ablaufdiagramm für eine vom mobilen Teilnehmer abgehende Verbindung
Figur 4 ein Ablaufdiagramm für eine vom mobilen Teilnehmer empfangene Verbindung

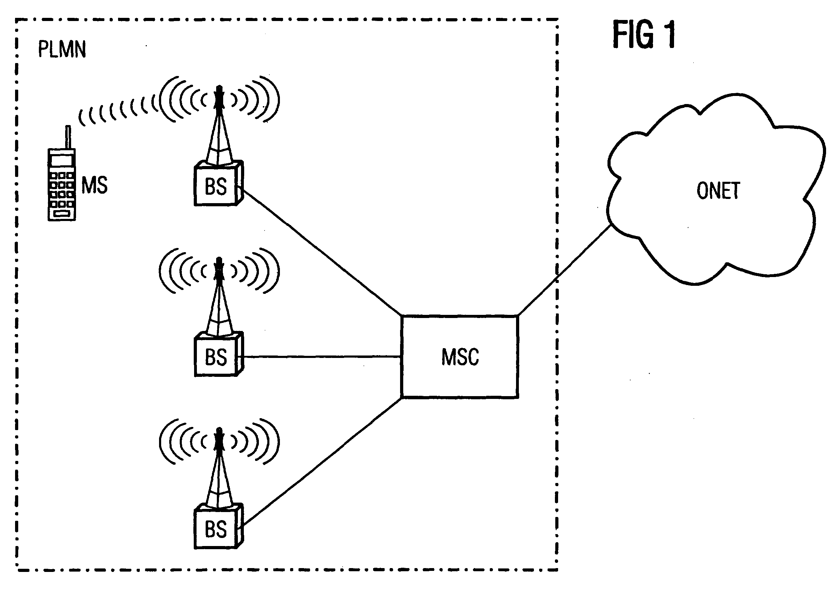

Figur 1 zeigt einzelne Netzelemente eines Telekommunikationsnetzes, die am Verfahren zur lokationsabhängigen Verbührung von Verbindungen zwischen einem mobilen und einem weiteren Teilnehmer des Telekommunikationsnetzes beteiligt sind.

Im vorliegenden Beispiel ist ein mobiles Endgerät MS eines mobilen Teilnehmers dargestellt, die über eine Funkschnittstelle mit den Einrichtungen des Mobilfunknetzes drahtlos verbunden ist. Dabei weist das beispielsweise nach dem GSM-Standard definierte Mobilfunknetz PLMN, das in der Figur 1 mit einem gestricheltem Rahmen angedeutet wird, an der Funkschnittstelle ein funktechnisches Teilsystem auf, das über funktechnische Einrichtungen, auch Basisstationen BS genannt, in den einzelnen Funkzellen des zellular strukturierten Mobilfunknetzes sowie über in der Figur 1 nicht gezeigte Basisstationssteuerungsstationen, die mit den Basisstationen verbunden sind, verfügt.

Die Basisstationen dienen zum Senden und Empfangen von Signalisierungsnachrichten bzw. Nutzinformationen, die zwischen den mobilen Endgeräten und dem Mobilfunknetz drahtlos über Funksignale ausgetauscht werden. Die Basisstationssteuerungen übernehmen die steuerungstechnischen Funktionen der Funkübertragung wie z.B. die Zuordnung von Übertragungskanälen, in denen die Signalisierungsnachrichten bzw. Nutzinformationen übertragen werden.

Mit dem funktechnischen Teilsystem ist ein vermittlungstechnisches Teilsystem verbunden, das üblicherweise mehrere Mobilvermittlungsstellen MSC zum Durchschalten von Verbindungen aufweist. Darüber hinaus übernimmt ein Teil der Mobilvermittlungsstellen MSC Aufgaben zur Vergebührung von Verbindungen zwischen einem mobilen und einem weiteren Teilnehmer des Telekommunikationsnetzes. Solche Aufgaben bestehen beispielsweise darin, verbindungsbezogene Datensätze der jeweiligen Teilnehmer aufzuzeichnen und die jeweilige Gebühr durch Verknüpfung der aufgezeichneten Datensätzen mit einer Tariftabelle zu ermitteln.

In einem vermittlungstechnischen Teilsystem sind des weiteren Speichereinrichtungen wie z.B. eine Heimatdatei und mindestens eine Besucherdatei zum Speichern von Teilnehmerdaten sowie eine Beglaubigungszentrale und eine Gerätedatei vorhanden, die weder in Figur 1 dargestellt noch im vorliegendem Beispiel näher erläutert werden.

Mit mindestens einer Mobilvermittlungsstelle des vermittlungstechnischen Teilsystems ist ferner ein weiteres Teilnetz ONET des Telekommunikationsnetzes beispielsweise ein Festnetz oder ein anderes Mobilfunknetz verbunden.

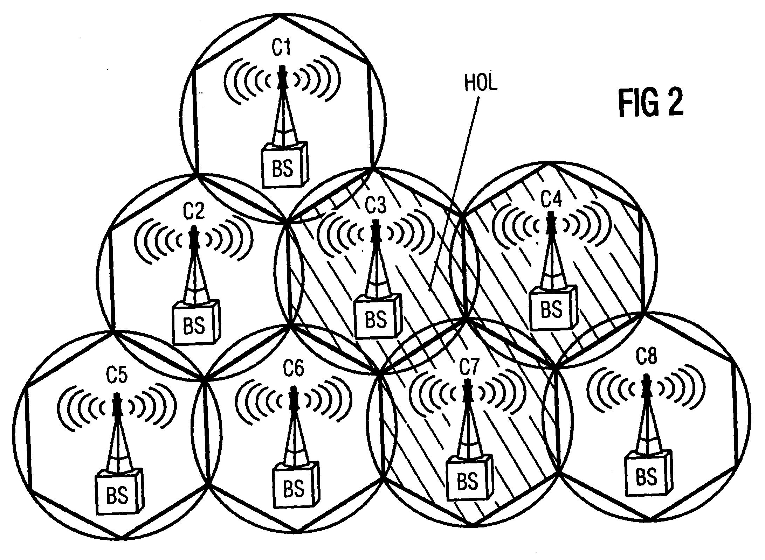

In Figur 2 ist ein Beispiel einer von einem Mobilfunknetzbetreiber geplanten zellularen Netzstruktur dargestellt. Abhängig von Orten, an denen Basisstationen BS aufgestellt sind, wird ein betimmter geographischer Bereich von zu den Basisstationen gehörenden Funkzellen überdeckt. In der Regel verwaltet der Mobilfunkbetreiber sowohl Kennungen der geographischen Orte der einzelnen Basisstationen als auch Zellkennungen (C1,...,C8) der einzelnen Funkzellen. Der Mobilfunkbetreiber kann anhand der Zellkennungen eine oder mehrere Funzellen zu einem Heimatbereich HOL für den mobilen Teilnehmer zusammenfassen und/oder anhand der Kennungen der geographischen Orte einen mindestens von einer Funkzelle überdeckten geographischen Bereich als Heimatbereich des mobilen Teilnehmers definieren. Für die Festlegung eines Heimatbereichs wählt der Mobilfunkbetreiber üblicherweise eigene Funkzellen aus oder trifft über die Benutzung fremder Funkzellen eine Vereinbarung mit einem weiteren Mobilfunkbetreiber. Ebenso können mehrere Heimatbereiche einem mobilen Teilnehmer zugeteilt werden.

Für einen Heimatbereich kann ein bestimmter Heimattarif zur Vergebührung von Verbindungen zwischen dem mobilen Teilnehmer und einem weiteren Teilnehmer im Telekommunikationsnetz vereinbart werden. Auf diese Weise können Mobilfunkbetreiber eine dem Festnetz ähnliche Tarifstruktur gestalten.

Um einen geeigneten Tarif, der vom Aufenthaltsort des mobilen Teilnehmers während der Verbindung abhängt, in der Vergebührung berücksichtigen zu können, wird eine Lokationsinformation über die mit dem mobilen Teilnehmer in Verbindung stehende Basisstation an eine für den anrufenden Teilnehmer zuständigen vergebührende Vermittlungsstelle übertragen.

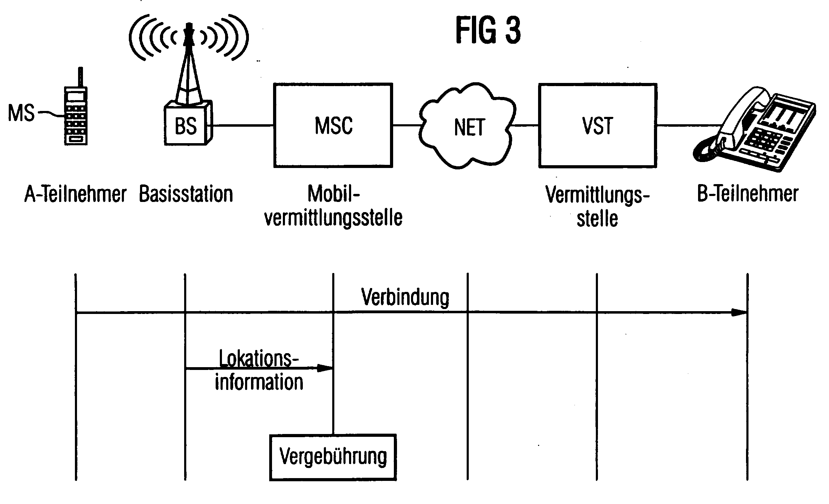

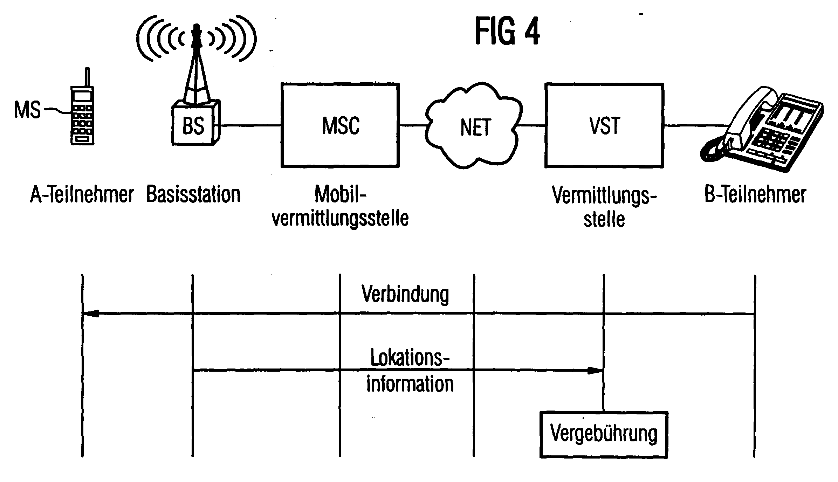

Zur näheren Erläuterung des Verfahrens zur lokationsabhängigen Vergebührung zeigt Figur 3 ein Ablaufdiagramm für eine vom mobilen Teilnehmer abgehenden Verbindung, auch MOC (Mobile Originating Call) genannt, und Figur 4 ein Ablaufdiagramm für eine vom mobilen Teilnehmer empfangene Verbindung, die auch als MTC (Mobile Terminating Call) bezeichnet wird.

In Figur 3 ist angenommen, daß ein mobiler A-Teilnehmer mit seinem mobilen Endgerät MS eine Verbindung zu einem B-Teilnehmer beispielsweise einem Festnetzteilnehmer aufbaut. Die Signalisierungsnachrichten bzw. Nutzinformationen werden dabei wie folgt durchgeschaltet. Über die Funkschnittstelle gelangen die Signalisierungnachrichten bzw. Nutzinformationen zu der Basisstation, in dessen Funkzelle sich der A-Teilnehmer aufhält. Von der Basisstation werden dieselben über eine Mobilvermittlungstelle MSC durch Teile des Telekommunikationsnetzes NET an eine für den B-Teilnehmer zuständige Vermittlungsstelle VST weitergeleitet. Von dort werden die Signalisierungsnachrichten bzw. Nutzinformationen an den B-Teilnehmer übermittelt.

Zum Zwecke der Vergebührung wird beim Verbindungsaufbau und/oder beim Verbindungsabbau eine Lokationsinformation von der mit dem A-Teilnehmer in Verbindung stehende Basistation an die für den A-Teilnehmer zuständige vergebührende Mobilvermittlungstelle in Form von Signalisierungsnachrichten beispielsweise eines Mehrfrequenzkode (MFC), eines ISUP-Protokolls (ISDN User Part) oder einer sogenannten Chargeband-Nummer übertragen. Die Übertragung der Lokationsinformation ist auch in Form eines Kurznachrichtendienstes (SMS) denkbar.

Eine solche Lokationsinformation beinhaltet wenigstens eine Zellkennung der Funkzelle, in der sich der A-Teilnehmer aufhält, bzw. wenigstens die Kennung des geographischen Ortes der Basisstation, mit der der A-Teilnehmer in Verbindung steht.

Entsprechend der Lokationsinformation, die den Aufenthaltsort des A- Teilnehmers widerspiegelt, wird bei der Vergebührung ein dem Heimatbereich zugeordneter Heimattarif oder ein außerhalb des Heimatbereichs geltender Tarif berechnet.

Um festzustellen, ob der A-Teilnehmer während der Verbindung innerhalb bzw. außerhalb seines Heimatbereichs bleibt, ihn verläßt oder in ihn eindringt, wird vorzugsweise im Falle, daß der A-Teilnehmer in eine andere Funkzelle wechselt, eine neue Lokationsinformation an die für den A-Teilnehmer zuständige vergebührende Mobilvermittlungsstelle übertragen.

Wenn eine Lokationsinformation neu übertragen wird, dann werden die neue und die aktuelle Lokationsinformation miteinander verglichen. Stimmen diese nicht überein, wird der Zeitpunkt des Eintreffens der neuen Lokationsinformation an der vergebührenden Mobilvermittlungsstelle erfaßt. Falls der Wechsel in eine andere Funkzelle dazu führt, daß der A-Teilnehmer seinen Heimatbereich verläßt oder ihn betritt, kann anhand des erfaßten Zeitpunktes ein entsprechender Tarifwechsel erfolgen.

Analog zu dem vorstehend erläuterten Verfahren baut gemäß der Darstellung in Figur 4 ein B-Teilnehmer beispielsweise ein Festnetzteilnehmer eine Verbindung zu einem mobilen A-Teilnehmer auf. Die Signalisierungsnachrichten bzw. Nutzinformation werden entsprechend in umgekehrter Richtung übermittelt. Die erwähnte Lokationsinformation wird bei dieser Konstellation nicht nur von der Basisstation BS bis zu der für den A-Teilnehmer zuständigen Mobilvermittlungstelle MSC übertragen, sondern weiter durch Teile des Telekommunikationsnetzes NET bis zu der für den B-Teilnehmer zuständigen vergebührenden Vermittlungsstelle VST durchgeschaltet. Weiteres läuft analog zu dem in Figur 3 beschriebenen Verfahren ab.

Darüber hinaus können die Verfahren zum MOC (Figur 3) und zum MTC (Figur 4) zu einem Verfahren für eine Verbindung zwischen mobilen Teilnehmern, auch MMC (Mobile to Mobile Call) genannt, zusammengefaßt werden. In den Ablaufdiagrammen von Figur 3 und 4 wäre dann der B-Teilnehmer als ein mobiler Teilnehmer mit Verbindung zu einer Basisstation und die Vermittlungsstelle VST als eine Mobilvermittlungsstelle zu denken.

## Patentansprüche

1. Verfahren zur lokationsabhängigen Vergebührung von Verbindungen zwischen mobilen Teilnehmern oder zwischen mobilen Teilnehmern und Festnetzteilnehmern in einem Telekommunikationsnetz, innerhalb dessen sich ein mobiles Endgerät (MS) eines mobilen Teilnehmers in einer Funkzelle einer funktechnischen Einrichtung (BS) zum Senden und/oder Empfangen von Signalisierungsnachrichten und/oder Nutzinformationen von und/oder zu einem mobilen Endgerät eines mobilen Teilnehmers aufhält,
**dadurch gekennzeichnet**,
a) daß bei einer Verbindung zwischen einem mobilen Teilnehmer und einem weiteren Teilnehmer eine Lokationsinformation über die mit dem mobilen Teilnehmer in Verbindung stehende funktechnische Einrichtung an eine für den anrufenden Teilnehmer zuständige vergebührende Vermittlungsstelle (MSC, VST) zu dem Zwecke übertragen wird,
b) daß bei Aufenthalt des mobilen Teilnehmers innerhalb eines ihm zugeteilten Heimatbereichs (HOL), der durch eine Funkzelle oder durch Zusammenfassung von Funkzellen und/oder durch einen mindestens von einer Funkzelle überdeckten geographischen Bereich definiert wird,
c) ein dem Heimatbereich zugeordneter Heimattarif in der Vergebührung berücksichtigt wird.

2. Verfahren nach Anspruch 1
**dadurch gekennzeichnet**,
daß Lokationsinformation in Form von Signalisierungsnachrichten übertragen wird.

3. Verfahren nach einem der vorangehenden Ansprüche
**dadurch gekennzeichnet**,
daß die Lokationsinformation zumindest eine Zellkennung (C1,...,C8) zur Identifikation der zu einer funktechnischen Einrichtung (BS) gehöhrenden Funkzellen und/oder zumindest die Kennung eines geographischen Ortes einer funktechnischen Einrichtung enthält.

4. Verfahren nach einem der vorangehenden Ansprüche
**dadurch gekennzeichnet**,
daß die Lokationsinformation beim einem Verbindungsaufbau und/oder Verbindungsabbau an die vergebührende Vermittlungsstelle (MSC, VST) übertragen wird.

5. Verfahren nach Anspruch 4
**dadurch gekennzeichnet**,
daß die Lokationsinformation auch bei einem Wechsel des mobilen Endgerät (MS) in eine Funkzelle einer anderen funktechnischen Einrichtung (BS) an die vergebührende Vermittlungsstelle (MSC, VST) übertragen wird, wobei dann, wenn eine an die vergebührende Vermittlungsstelle neu übertragene Lokationsinformation nicht mit der aktuellen Lokationsinformation übereinstimmt, gegebenfalls ein Zeitpunkt für einen Tarifwechsel erfaßt wird.
